# EUROPEAN PATENT APPLICATION

(11) **EP 1 864 891 A1**
(43) Date of publication of application: **12.12.2007**
(21) Application number: 06450079.6
(22) Date of filing: 09.06.2006
(51) Int. Cl.: B62D 55/205, B62D 55/21

(54) **Track shoe assembly for tracked vehicle**

(71) Applicant: Chaiseri Metal & Rubber Co., Ltd., 12120 Pathumthani (TH)
(72) Inventor: Koolhiran, Hiran, Bankgkok 10900 (TH)
(74) Representative: Patentanwaltskanzlei Matschnig

(57) **Abstract**

Track shoe assembly for tracked vehicle comprising a track shoe body of which featuring pin housing, sleeves, end member and track shoe pin a plurality of end connectors with side flange connecting the track shoe body and a rubber pad assembled to the track shoe body. The track shoe body is rubberized and incorporates two rubber bushed track shoe pins, each track shoe pin is housed within two separate track shoe housings which have been inserted into the sleeves and the end member have been assembled thereto. The rubber pad is made of a metal plate shaped to form curves and a flat channel between said curves, rubber with determine thickness and configuration is pressed bond onto the curve side and on the concave side of the metal plate is provided with a pairs of nut and bolt at the location corresponding to the location of the hole prepared on the track shoe body facilitate engagement and/or disengagement of the rubber pad to the track shoe body.

## Description

### FIELD OF THE INVENTION

The present invention relates to a track shoe of tracked vehicle, in particular, a track shoe for armored vehicle and the like.

### BACKGROUND OF THE INVENTION

Tracked vehicles such as armored personnel carrier, tank, light tank and the like have long been used in military exercise maneuvering and even warfare scenarios. Various aspects of developments on these of vehicle have been attempted so as to improve its efficiency.

Development on track shoe for theses type of vehicle has also been attempted so as to improve mobility of the vehicle, reduce maintenance costs, etc.

Known track shoes for tracked vehicle such as those used in a conventional armored personnel carrier Model M 113 including its family series and light tank is made of iron body with single pin and padded with rubber pad. The rubber pad having directional and is changeable. The disadvantage of this type of track shoe is that the fact that the rubber pad is directional making it easy to determine the direction of which the vehicle is heading which is undesirable under warfare scenarios. In addition, with this type of track shoe, a hexagon metal rod connector is used for connecting each track shoe together so as to form flexible/pivotal continuously interconnected track shoes and thus, one of the problems often encountered with this type of assembly is that the connector is prone to disengaging from its position or sliding off and scratch against the vehicle body causing damages to the vehicle body. Further, this type of track shoe is not adaptable for maneuvering the vehicle on snow covered terrain. If the vehicle is to be used in such condition, the rubber pad must be removed causing inconveniences. Moreover, the bare metal track shoe causes greater ground pressure and higher friction causing damages to the ground/road surface, particularly, when the vehicle is operated on the town's road.

Another similar known type of track shoes is such as those which have been used with light tank such as Scorpion tank of England. However, the major disadvantage of this type of track shoe is that the rubber pad is not changeable. Once the rubber pad is wear off or damage, the entire track shoe need to be replaced with a new one, resulting in higher maintenance cost.

Therefore, there is a need for improved track shoe assembly for tracked vehicles that improve mobility of the vehicle, increase efficiency of the vehicle making it suitable for operation or maneuvering of vehicle under wider terrain types, easy and economical to maintain.

### SUMMARY OF THE INVENTION

It is an objective of this invention to provide new and improved track shoe assembly that increase efficiency of the vehicle, improves mobility, making the vehicle suitable for operation or maneuvering under wider terrain types, and easy and economical to maintain.

In view of the afore going objective, the track shoe assembly for tracked vehicle according to this invention feature a track shoe which includes a double pins track shoe body, end connectors and a rubber pad.

The double pins track shoe body feature two rubber bushed track shoe pins each pin is inserted into two separate pins housing. The two pins housing are then secured together using a sleeve and end member. The assembly is then rubberized to form a double pin track shoe body. The described arrangement of the track shoe body reduces vibration of the vehicle and prolongs use of the track shoes.

The end connectors are used to connect one track shoe to another adj acent track shoe so as to form a flexible pivotal and continuous interconnected track shoe while providing a firm connection reducing the likelihood of displacement of the pins. The end connector also posses a side flange and together with configurations of the rubber pad of the track shoe according this invention, it crease cruising capability of the vehicle. The end connector is replaceable when wear off or damaged.

The rubber pad is assembled onto the track shoe body by a suitable fastening means while allowing easy disassemble of the rubber pad if replacement is needed. The rubber pad features a wide front surface to allow greater ground contact and having surface pattern such that it provides better cruising ability and maintains stability of the vehicle over wider ranges of terrain. In addition, the rubber paid is designed to be non-directional making it harder to detect the direction which the vehicle is heading which is a desirable military deployment. Further, the rubber pad is designed to be replaceable, once wear off or damaged, only the rubber pad will need to be replaced, without having to replace the entire track shoe, making it easy and more economical to maintain.

### BRIEF DESCRIPTION OF THE DRAWINGS

A preferred embodiment of the invention is discussed below with respect to the accompanying drawings,

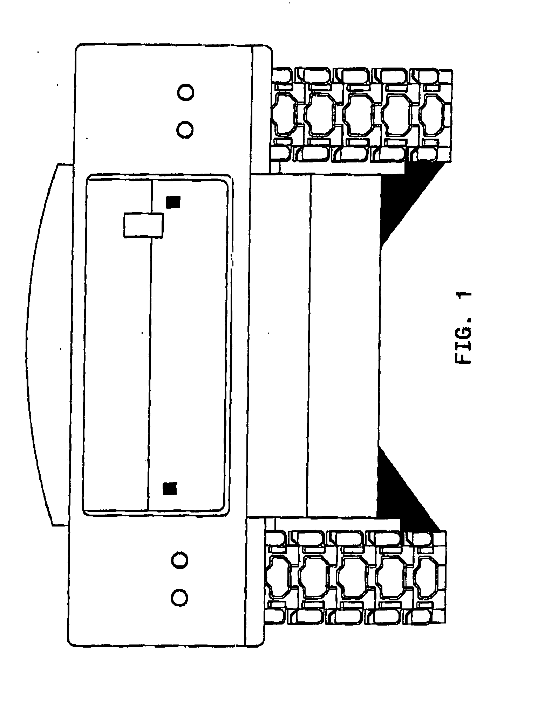

FIG. 1 is a front view of a M113 tracked vehicles employing the prior art tracked shoes;

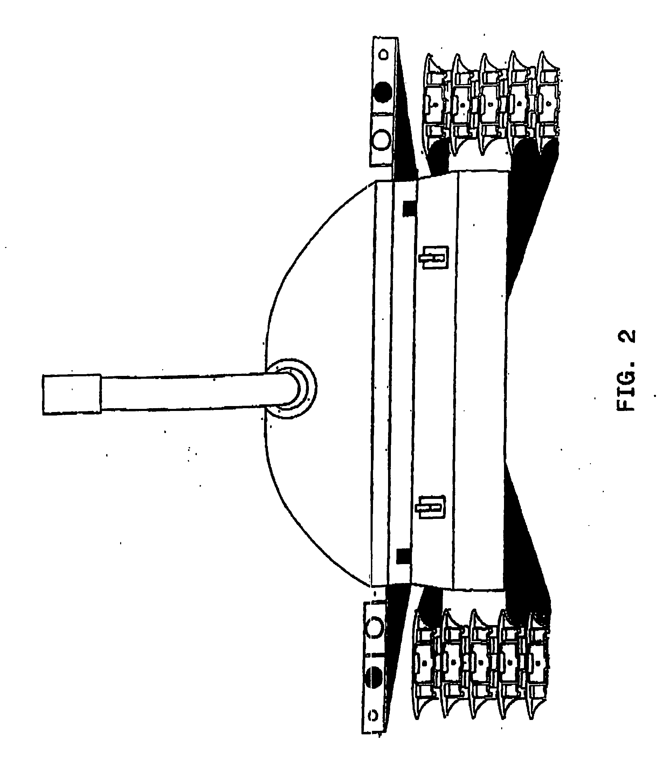

FIG. 2 is a front view of a Scorpian Tank employing the prior art tracked shoes;
FIG. 3 is a front view of track shoes having dumbbell-like shape rubber pad employed in a tracked vehicle;
FIG. 4 is a front view of track shoes having X-like shape rubber pad employed in a tracked vehicle;
FIG. 5 is an explode perspective view of track shoes of FIG. 3 and 4;

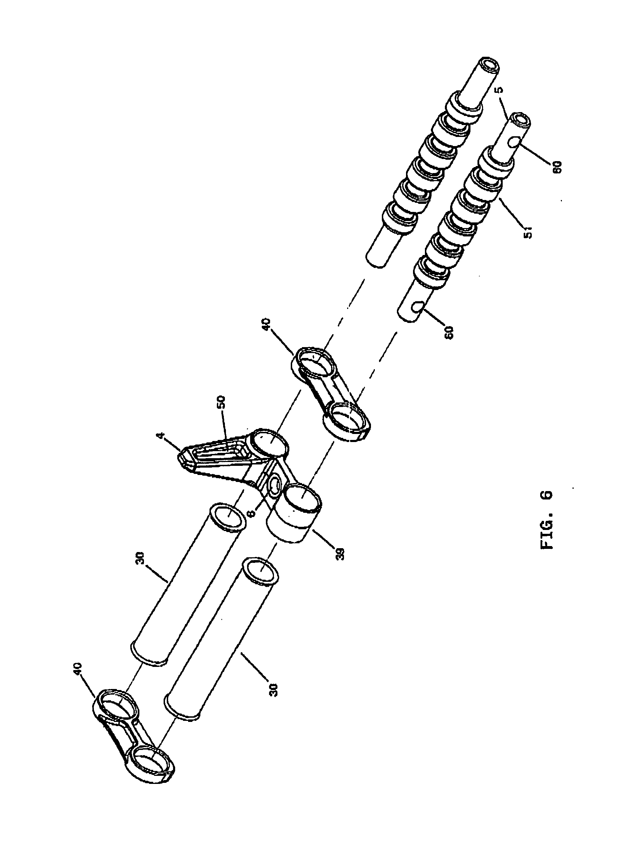

FIG. 6 is an explode perspective view of track shoes body of FIG. 5 before rubberizing;
FIG. 7 is a perspective view of several track shoes connected each other by end connectors;
FIG. 8 is a rear enlarged perspective view of tracked shoes having dumbbell-shape rubber pad of FIG. 3; and
FIG. 9 is a rear enlarged perspective view of tracked shoes having X-shape rubber pad of FIG. 4.

### DETAIL DESCRIPTION OF THE PREFERRED EMBODIMENTS

The track shoe 2 according to this invention is developed for used with tracked vehicle 1 such as armored personnel carriers, tanks including light tanks and the likes. The **track shoe 2** according to this invention will now be described by way of example of a preferred embodiment and by specifically refer to the drawings.

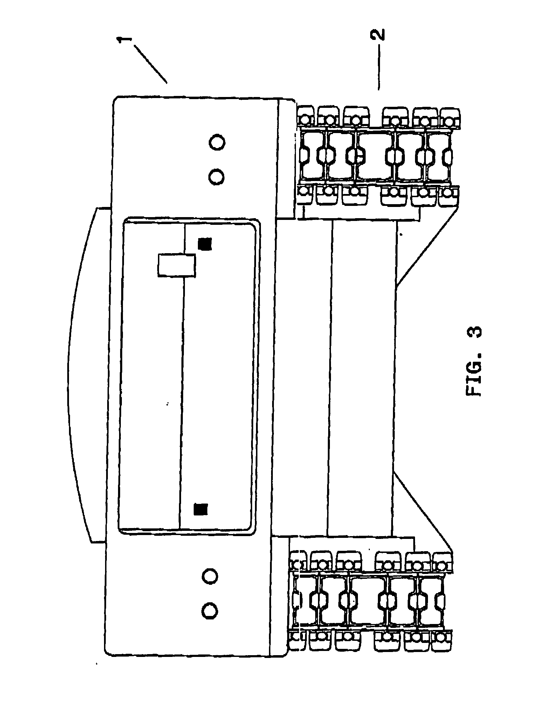

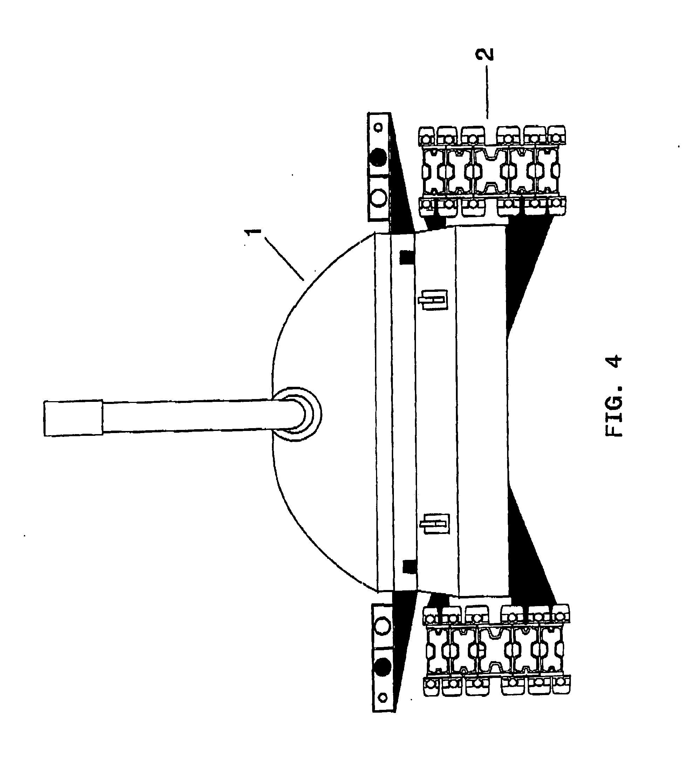

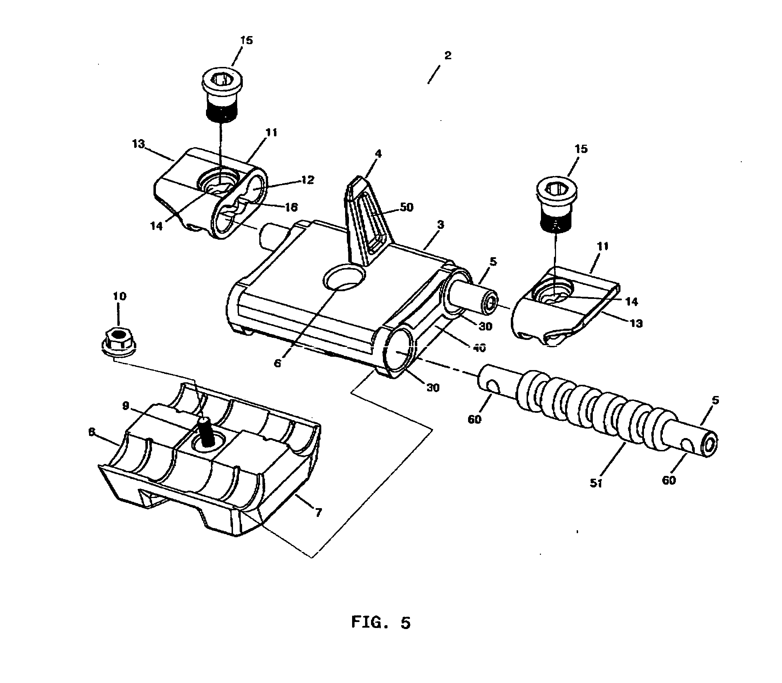

Figs. 3 and 4 show the **track shoe 2** for **tracked vehicle 1** according to this invention which has been installed for used with armored personnel carrier. The **track shoe 2** comprises the double pins **track shoe body 3**, the **end connectors 11** and the **rubber pad 7**. The exploded component parts of the double pin **track shoe body 3**, the **end connector 11** and the **rubber pad 7** are as shown in Fig. 5.

The double pins **track shoe body 3** prior to rubberizing features two rubber- bushed **track shoe pins 5,** two **tubular pins housing 30,** a **sleeve 39,** capable of accommodating the **pin housing 30** and two **end members 40**.

Each of the **track shoe pin 5** is made of hollowed tubular metal, preferably steel, having a determined length. The **track shoe pin 5** is bushed with a plurality of **rubber rings 51** disposed along the length of the **pin 5**. Approximately around each end of the **track shoe pin 5** is provided with a **notch 60** on the same side and at the identical location.

The **pin housing 30** has a tubular shape corresponding to the shape of the **pin 5** and is capable of accommodating the **pin 5**.

The **sleeve 39** is also featured two tubular structures corresponding to the shape of the **pin housing 30**, while spaced apart, the tubular structures of the **sleeve 39** are joint together by a web portion, and a **hole 6** is prepared on the mentioned web portion for receiving engagement of the **rubber pad 7** to the **track shoe body 3** which will be subsequently described. On one of the tubular structure of the **sleeve 39**, a **guide member 4** continuously formed to the tubular structure. The **guide member 4** has a wider base covering the top surface of the tubular structure while its top is narrower than its base. **Recesses 50** are prepared on sides of the **guide member 4**.

The **end member 40** is a metal plate, preferably steel, having two holes, each hole having a size corresponding to the size of the **pin housing 30** such that the **pin housing 30** can be inserted into the hole.

In assemble, each of the two tubular **pins housing 30** is inserted in to the **sleeve 39** securing the two **pins housing 30** while maintaining the distant between them. Each of the end member 40 is assembled to each end of the **pin housing 30** having each end of each **pin housing 30** fitted inside each hole of the **end member 40**. The **sleeve 39** is located around the center of the **pin housing 30** and between the two **end members 40** forming a **track shoe body 3**. The **track shoe body 3** is then brazed with copper and rubberized to form a complete double pin **track shoe body 3**. During rubberization, a hole is prepared at the location corresponding to the location of the **hole 6** prepared on the web portion of the **sleeve 39**.

The **end connector 11** is used for connecting the completed **track shoe body** 3 to another adjacent **track shoe body 3.** A plurality of **end connectors** 11 may be needed to connect the **track shoe bodies 3** so as to form a flexible pivotal and continuous interconnected **track shoe 2** over the road wheels (not shown).

**The end connector 11** is a curve metal structure encasing two parallel and connected, tubular structures capable of housing the **pin housing** 30. **Threaded hole 14** are prepared on top surface for receiving of a bolt. The free end of the **end connector 11** is cut away forming a **side flange** which in corporation with the existence of the **rubber pad** increase cruising capability of the vehicle.

The **rubber pad 7** is made with combination of metal plate and rubber. The metal plate is shaped to form two **curve shapes 8** with a flat channel in between corresponding to the shape and size of the **track shoe body 3**. On the concave side of the shaped metal plate, a fastening means, preferably a set of bolt **9 and nut 10** is prepared at the location corresponding to the location of the **hole 6** prepared on the track shoe body (including hole prepare on the web portion of the **sleeve 39**) such that the **bolt 9** on the metal plate able to fasten to the **track shoe body 3** through such **holes 6**. On another surface of the shaped metal plate, rubber with determine thickness and configuration is pressed bond onto the mentioned surface. The complete **rubber pad 8** is then assembled to the **track shoe body 3** using the prepared **nut 10** and bolt **9**.

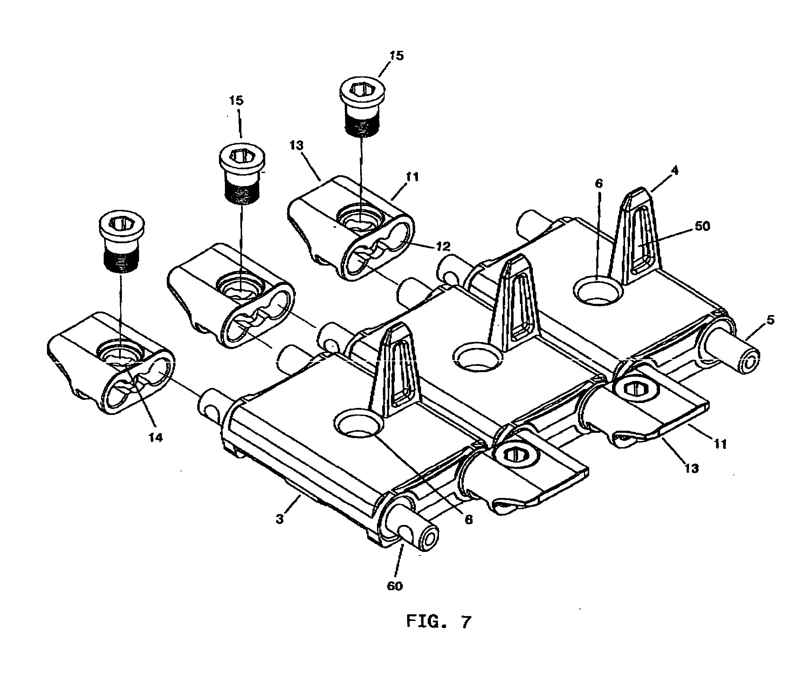

As shown in Fig. 7 the completed **track shoe body 3** is being connected to one another using the **end connectors 11**. On both side of the **track shoe body 3**, the **end connector 11** is assembled to the **track shoe body 3** by having one end of **track shoe pin 5** protruding from **track shoe body 3** beyond the **end member 40** engaged onto one of its parallel and connected tubular structure while the remaining tubular structure is engaged to **a track shoe pin 5** of the adjacent **track shoe body 3**. The **end connector 11** is then fastened in place by using a suitable fastening means, preferably by using a **bolt 15** with threaded tail fasten into the **threaded hole 14** prepared on the top surface of the **end connector 11.**

As described earlier that a **notch 60** is prepared on each end of the **track shoe pin 5**, it is necessary that during insertion of the **track shoe pin 5** into the **pin housing 30**, the **notch 60** prepared on the **track shoe pin 5** should face side way. With this arrangement, once the **end connector 11** is engaged to the **track shoe pin 5**, and the **bolt 15** is fastened the threaded tail of **bolt 15** and the **notch 60** will perfectly couple to one another resulting in a more secure engagement between the **end connector 11** and the **track shoe pin 5** reducing the likely hood of disengaging of the **track shoe pin 5** as in the conventional track shoe assembly.

As mentioned, the **rubber pad 7** is made of a combination of the metal plate and the rubber with determine thickness and configuration is pressed bond onto the metal plate to form a complete **rubber pad 7**. In operation/maneuvering of the vehicle, the **rubber pad 7** will come in contact with the ground/terrain surface. Therefore, the configuration of the front surface of the **rubber pad 7** is very essential in order to improve mobility, stability or cruising ability of the vehicle.

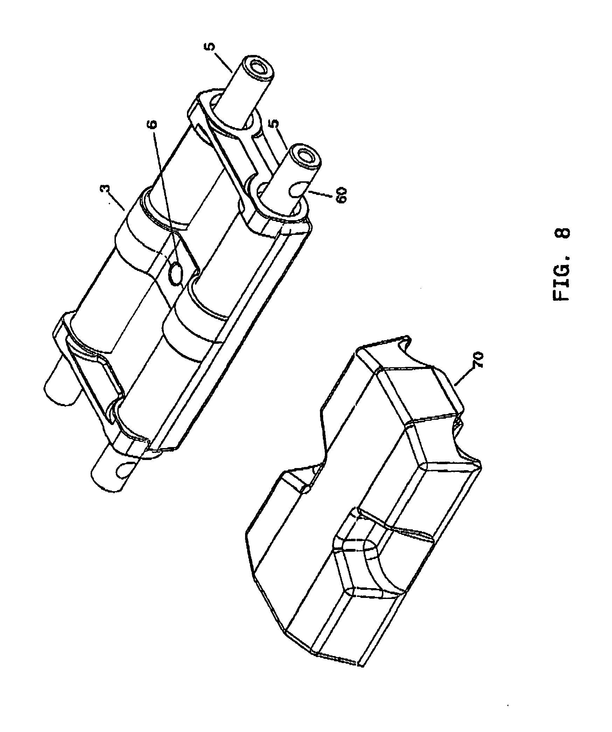

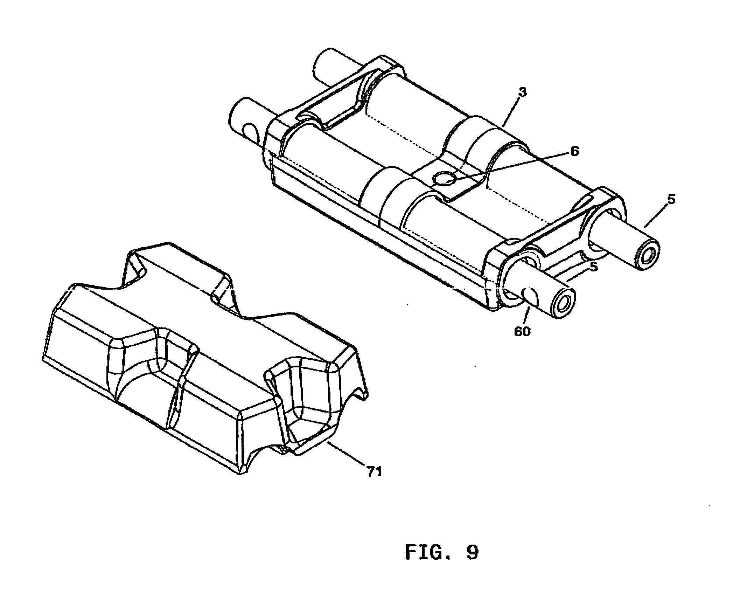

The track shoe assembly according to this invention incorporates different configurations of the **rubber pad 7**. For example, in Fig. 8, the **rubber pad 7** having a front surface configured into **a dumbbell like pattern 70**. In Fig. 9, the **rubber pad 7** is configured into an **X-shaped like pattern 71.**

The pattern of the front surface of **rubber pad 7** configured into **dumbbell like 70** or **X-shaped like 71** according to this invention together with the fact that the **rubber pad 7** has a wide front surface improves stability of the vehicle as it provides better grip against the ground/terrain surface. In addition, the design of the pattern of the **rubber pad 7** front surface according to this invention not only produce less ground pressure, making it road friendly (do not cause damage to the road surface), but also making it suitable for maneuvering the **vehicle 1** over wider ranges of terrain. The **vehicle 1** can be operated efficiently over snow covered terrain without having to remove the **rubber pad** 7 as with the conventional M113 APC. The **vehicles 1** equipped with the **track shoe 2** according to this invention also operate well under desert condition, soft soil, and/or swampy condition.

The pattern of the front surface of the **rubber pad 7** configured into **dumbbell like 70 or X-shaped like 71** according to this invention are design to be non-directional pattern. That is, the pattern on the front surface of the **rubber pad 7** is symmetrical, making it difficult to determine the direction which the vehicle is traveling which is desirable and ideal under warfare scenarios as the oppose party will have difficulty in tracing the vehicle.

Further, the track shoe assembly according to this invention includes component parts that are designed to be replaceable. Thus, the wear off or damage parts may be replaced when needed without having to replace the entire unit unlike the known track shoe which the entire unit need to be replaced although other parts are still in good condition.

For example, if the **rubber pad 7** of the **track shoe 2** according to this invention is wore off, the **rubber pad 7** may be replaced by simply unfasten the **nut 10** and **bolt** 15 and replace with a new **rubber pad 7**, without having to replace the entire **track shoe body 3** making maintenance of the **vehicle 1** easy and more economical.

As mentioned earlier that the **track shoe body 3** according to this invention includes a **guide member 39** which has a wider base covering the top surface of the tubular structure while its top is narrower than its base. **Recesses 50** are prepared on sides of the **guide member 39** in order to reduce friction between the **guide member 39** and the road wheel resulting in less vibration of the **track shoe 2** during operation of the **vehicle 1** and thus prolong use of the **track shoe 2.**

In addition, as it can be appreciate, the **track shoe 2** according to this invention is developed with minimizing use of metal by incorporating parts with hollows characteristic while maintaining sufficient strength such as in the **track shoe pin 5** and the **end connector 11**, having **recesses 50** or grooves 50 where possible, such as on the **guide member 39** and introduce higher use of rubber, such as having large **rubber pad 7**. These factors not only reduce manufacturing costs as it reduce use of metal, it also reduce total weight of the vehicle resulting in lighter vehicle and thus lower fuel consumption rate, making use of the **vehicle 1** become more economic.

Therefore, utilizing track shoe assembly for **tracked vehicle 1** according to this invention improve mobility of the **vehicle 1**, increase efficiency of the **vehicle 1** making it suitable for operation or maneuvering of **vehicle 1** under wider terrain types, easy and economical to use and maintain.

## Claims

1. Track shoe assembly for tracked vehicle comprising:
- a track shoe body featuring pin housing, sleeves, end member and track shoe pin;
- a plurality of end connectors connecting the track shoe body; and
- a rubber pad assembled to the track shoe body
**characterized in that** the track shoe body is rubberized and incorporates two rubber bushed track shoe pins, each track shoe pin is housed within two separate track shoe housings which have been inserted into the sleeves and the end member have been assembled thereto.

2. Track shoe assembly according to Claim 1, wherein each of the end connectors having two parallel and connected tubular structures, each capable of housing ends of pin housing connecting one track shoe body to another track shoe body, the end connector includes a thread holes prepared for receiving a bolt connecting to end connector to the track shoe body and that the end connector include a side flange.

3. Track shoe assembly according to Claim 1 wherein the ends of the rubber bushed track shoe pin is prepared with notches to facilitate securing of the end connector.

4. The track shoe assembly according to Claim 1 wherein the sleeve which securing the pin housing includes a guide member having recesses on its sides.

5. The track shoe assembly according to Claim 1 wherein the track shoe body includes a hole prepared thereto for receiving engagement of the rubber pad to the track shoe body.

6. The track shoe assembly according to Claim 1 wherein the rubber pad is a metal plate shaped to form curves and a flat channel between said curves having rubber with determine thickness and configuration pressed bond onto the curve side and on the concave side of the metal plate is provided with a pairs of nut and bolt at the location corresponding to the location of the hole prepared on the track shoe body facilitate fastening of the rubber pad to the track shoe body.

7. Track shoe assembly according to Claim 6 wherein the configuration of the rubber pad is a dumbbell-like pattern.

8. Track shoe assembly according to Claim 6 wherein the configuration of the rubber pad is an X-shaped like pattern.
